Europäisches Patentamt

(19) European Patent Office

Office européen des brevets

(11) Publication number: **0 220 715**
**B1**

(12) EUROPEAN PATENT SPECIFICATION

(45) Date of publication of the patent specification:
05.07.89

(21) Application number: **86114954.0**

(22) Date of filing: **28.10.86**

(51) Int. Cl.⁴: **C 03 B 37/018, C 23 C 16/04**

(54) Method of manufacturing optical fibres with non-circular core cross-section.

(30) Priority: **29.10.85 IT 6791185**

(43) Date of publication of application:
**06.05.87 Bulletin 87/19**

(45) Publication of the grant of the patent:
**05.07.89 Bulletin 89/27**

(84) Designated Contracting States:
**DE FR GB NL SE**

(56) References cited:
**EP-A- 0 134 743**
**GB-A- 2 012 983**
**US-A- 3 982 916**
**US-A- 4 528 009**

(73) Proprietor: **CSELT Centro Studi e Laboratori Telecomunicazioni S.p.A., Via Guglielmo Reiss Romoli, 274, I-10148 Turin (IT)**

(72) Inventor: **Cocito, Giuseppe, Via M. d'Azeglio, 15, S. Giusto Can. Se (Torino) (IT)**
Inventor: **Grego, Giorgio, Via Amati, 130/5, Venaria (Torino) (IT)**
Inventor: **Modone, Eros, Via Cibrario, 45, Torino (IT)**

(74) Representative: **Riederer Freiherr von Paar zu Schönau, Anton, Van der Werth, Lederer & Riederer Freyung 615 Postfach 2664, D-8300 Landshut (DE)**

## Description

The present invention relates to optical-fibre manufacture and more particularly to a method of fabrication of optical fibres with non-circular core cross-section according to the preamble of claim 1.

Optical fibres of this kind are used, e.g. in sensors and couplers of different kinds, in polarization-maintaining fibres for coherent optical-communications systems, which are of interest since they allow higher spacing between repeaters than other kinds of fibres, in multicore fibres, etc.

Nowadays, fibres with non-circular core are obtained, in case of simple geometrical shapes, e.g. the elliptical core fibres, by mechanical deformation of a fibre with originally circular core. This gives rise to problems of mechanical strength and of constance of characteristics in time and for thermal effects.

In case of more complex shapes, as in case of multicore fibres, very complex apparatus is required, for instance a drawing furnace divided into a plurality of thermally-insulated sections with independently adjustable temperatures (see e.g. the paper entitled: «Coupled/noncoupled wave transmission in long-length of multicore optical fibres» presented by R.S. Romanyuk and J. Dorosz at ECOC'84, Stuttgart, 3-6 September 1984).

The object of the present invention is to provide a method which allows non-circular core fibres to be obtained without resorting to complex apparatus and mechanical deformations, since it can be implemented using the conventional manufacturing plants based on Chemical Vapour Deposition of the material forming the fibre.

The invention starts from a method known from EP-A-134 743 by which method optical fibres having a core with a circular cross-section, a core jacket layer with an elliptical cross-section and a circular outer tube section are manufactured. In this method, different layer thicknesses are obtained by different heating power along the circumference of the fibre, measures being taken that the thickness maxima are obtained at the temperature maxima and vice versa.

The present invention provides a method of manufacturing optical fibres with non-circular core cross-section, as characterized in claim 1.

Generally, the deposited layers will present along the deposition annulus a succession of thickness maxima and minima due to a corresponding succession of temperature minima and maxima. The invention insofar uses the natural material deposition, without resorting to special method steps. The layers will be deposited on the internal surface of the support tube according to a classical internal CVD process.

Temperature variation along the perimeter, necessary to thickness variation, may be due to various causes, such as a non-circular shape or the non-uniform thickness of the reaction support tube section. In a preferred embodiment, the support tube presents different sizes along two perpendicular axes. The tube shape can be maintained constant during deposition or can be varied by acting on the pressure inside the tube. Tubes with circular internal section and polygonal external section or vice versa can be used.

Instead of exploiting the support tube shape, the desired temperature distribution can be obtained by a conventional cylindrical tube arranged inside a refractory screen consisting of a tube, e.g. a $ZrO_2$ tube, having one or more longitudinal slits determining temperature maxima. The behaviour of the temperature between the different temperature maxima will depend on slit width and on the shape and thickness of the screen sectors comprised between contiguous slits.

Of course, the latter method can be combined with the method depicted in the preceding paragraphs: tubes with non-circular cross-sections can be screened with refractory tubes equipped with slits.

A number of embodiments of the invention will be now described by way of example, with reference to the annexed drawings, wherein:

Fig. 1 is the schematic partial view of a plant for manufacturing optical fibre preforms, wherein the present invention is applied, in case of deposition inside a reaction tube with non-circular section;

Fig. 2 is a cross-sectional view of a reaction tube with the deposited material;

Fig. 3 shows the temperature behaviour along the perimeter of the section of Fig. 2;

Fig. 4 shows the cross-section and the refractive index profile of the preform of Fig. 2, after collapse;

Fig. 5 shows some possible cross-sections of the reaction tube;

Fig. 6 is a view similar to that of Fig. 1, relating to the use of a screen;

Fig. 7 is a cross-section taken along line VII-VII of Fig. 6;

Fig. 8 is the temperature behaviour along the perimeter of the section of Fig. 7.

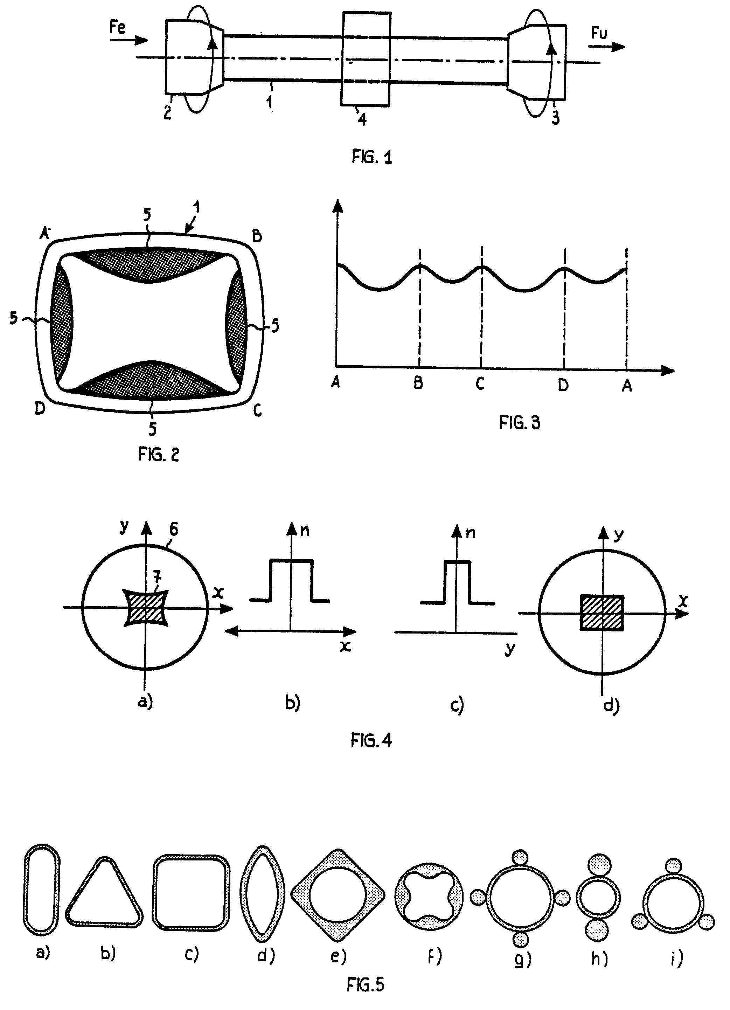

As shown in Fig. 1, a silica reaction tube 1 is arranged on the lathe of a conventional optical-fibre manufacturing system according to IVPO (Inside Vapour Phase Oxidatoin) method, which tube is designed to support the succession of non-uniform thickness layers which will form the internal preform portion.

The lathe is diagrammatically represented here by mandrels 2, 3. Arrows Fe, Fu denote the reactant inlet and the reaction products outlet. Vitreous material deposition inside the reaction tube takes place in correspondence with heating element 4, which faces a short length of the surface of tube 1 and slowly moves along the tube while this rotates around its axis; the heating element is then moved again to its initial position after the deposition of each layer.

Tube 1 has a non-circular cross-section, e.g. a rectangular cross-section (Fig. 2). Due to the heating, temperature distribution along the perimeter of any cross-section of the tube will present a maximum in correspondence with vertices A, B, C, D and a minimum in correspondence with the middle point of each side, and will vary with continuity between adjacent maxima and minima (Fig. 3).

Owing to the rectangular cross-section, temperature minima on adjacent sides will be different. As a consequence of such temperature distribution, the layers of material 5 depositing on the internal faces of tube 1 will have a thickness varying between a minimum in correspondence with the edges and a maximum in correspondence with the central portion of the fased, as shown in Fig. 2. Thickness maxima on adjacent faces will be different.

Once the deposition is completed, the preform is collapsed in a known way. The collapsed preform is shown in section in Fig. 4a, where 6 denotes the cladding and 7 the core. As shown, the core maintains an approximately rectangular shape, even after collapsing. A preform like that of Fig. 4a will present, e.g., a step-index profile, as shown in Figures 4b, 4c, along both axis x and axis y of the preform. By suitably dosing the amount of deposited glass, the core section will have substantially rectilinear sides (Fig. 4d).

Fibre drawing from the preform takes place with a known technology. The fibre obtained maintains polarization, as known from rectangular waveguide theory.

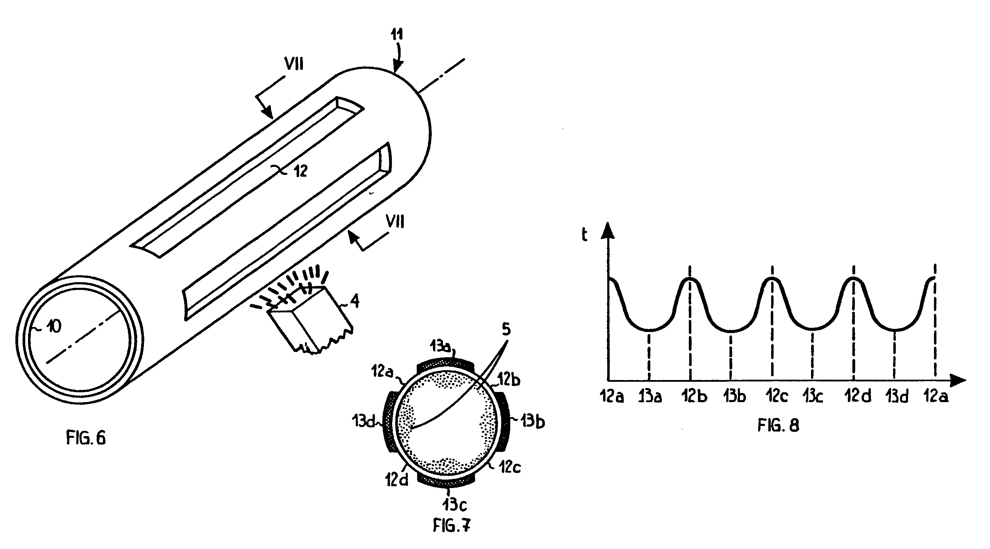

A number of other possible cross-sections for the reaction tube are shown in Fig. 5. Tubes with basically constant thickness walls can be used (Figures 5a, b, c, d) as well as tubes with walls whose thickness varies along the section perimeter (Figures 5e, 5f); variable wall thickness can be obtained also starting from a tube having at the beginning constant thickness walls, and by placing, at a certain step (initial, intermediate or final) of the deposition process, two or more silica rods (Fig. 5g, 5h, 5i) aside that tube, which rods, when the tube is collapsed, become incorporated into the walls thus originating thicker zones. In the embodiment of Fig. 5g, two opposite rods may have larger diameters than the other two.

Of course other shapes of the internal and/or external tube sections are possible, which can originate the temperature distribution necessary to allow non-uniform thickness layer deposition.

The shape of the tube cross-section can also be varied during deposition, by acting on the internal pressure with pressure adjusting means known for this kind of apparatus. This allows a further control on the shape of the deposites layers.

Tubes whose cross-sections present different sizes along two perpendicular axes, such as those of Figures 5a, 5d, 5h, are well suited to the manufacture of polarization maintaining fibres.

In the embodiment of Fig. 6, reaction tube 10 is a conventional tube with circular cross-section, and is arranged inside a tube 11 of refractory material, e.g. a $ZrO_2$ tube, resistent to high temperatures.

Tube 11 presents a series of slits 12 extending substantially along its whole length, so that it results composed of a succession of elements 13 joined at the ends. The number and the width of slits 12, as well as the shape and thickness of elements 13, determine the temperature distribution in tube 10.

Fig. 7 shows e.g. a tube with four slits 12a...12d, which give rise to a temperature distribution like that of Fig. 8, with equal maxima and minima in correspondence with the axes of the slits or respectively of elements 13; the deposited layers will have a maximum thickness in correspondence with elements 13a...13d and minimum thickness in correspondence with slits 12a...12d.

Obviously, in order to obtain within the screened tube a deposit like that shown in Fig. 2, two opposite slits must be wider (and consequently two opposite elements 13 must be narrower) than the other two. Obviously, a screen with one slit only could also be used. Moreover, screen 11 could comprise elements 13 with different thicknesses and/or shapes: in particular, the thicknesses of elements 13 determine the values of the temperature minima, and the shapes (in particular edge inclination) determine the temperature behaviour between adjacent maxima and minima.

## Claims

1. A method of manufacturing optical fibres, comprising the steps of fabricating a preform by depositing on the internal surface of a support tube (1; 10) a succession of layers of the fibre-forming material (5), the thickness of at least part of the layers varying along the perimeter of any section of the support tube (1, 10) between at least one maximum and one minimum, the material deposition being obtained by high-temperature synthesis of vapour-phase reactants, and said non-uniform thickness being achieved by temperature non-uniformity of the tube which gives rise, along the perimeter of the section, to at least one minimum temperature and one maximum temperature to give the desired varying thickness, collapsing the preform and drawing the fibre from the preform, characterized in that for manufacturing optical fibres with non-circular core cross-section (7), the maximum thickness of the layers is obtained at the region of minimum temperature of the internal surface of the tube and minimum thickness of the layers is obtained at the region of maximum temperature of the internal surface of the tube, the form of the support tube and the temperature distribution over the periphery thereof being chosen such as to maintain, during and after the collapse, the non-circular core cross-section achieved in the core region by the non-uniform deposition.

2. A method according to claim 1, characterized in that a support tube (1) with non-circular external cross-section is used.

3. A method according to claim 2, characterized in that said tube has walls with thickness varying along the perimeter.

4. A method according to claim 3, characterized in that said support tube (1), besides its tube-shaped body, comprises at least one rod longitudinally tangent to the tube-shaped body which becomes incorporated into the tube wall owing to heating.

5. A method according to claim 4, characterized in that a plurality of rods externally tangent to the tube-shaped body are provided, and two opposite rods have greater cross-section size than the other ones.

6. A method according to any one of claims 1 to 5, characterized in that during deposition the tube section shape is varied by acting on the pressure inside the tube itself.

7. A method according to any one of claims 1 to 6, characterized in that said thickness maxima and minima are obtained by inserting, between a heat source (4) and the support tube (10), a screening refractory element (11) which houses the support tube and presents at least one slit (12) extending along substantially the whole length of the screening element (11).

8. A method according to claim 7, characterized in that said screening element (11) presents a plurality of slits (12) having the same width.

9. A method according to claim 7, characterized in that said screening element (11) presents a plurality of slits (12) one of which at least has different width from the others.

**Patentansprüche**

1. Verfahren zum Herstellen optischer Fasern, mit den Verfahrensschritten, daß man eine Vorform durch Ablagerung aufeinanderfolgender Schichten des faserbildenden Materials (5) an der Innenfläche eines Trägerrohrs (1; 10) herstellt, wobei sich die Dicke wenigstens eines Teils der Schichten entlang dem Umfang eines beliebigen Querschnitts des Trägerrohrs (1, 10) zwischen wenigstens einem Maximum und einem Minimum ändert, und man die Materialablagerung durch Hochtemperatur-Synthese von Reaktionsstoffen in der Dampfphase und die ungleichförmige Dicke durch Temperatur-Ungleichförmigkeit des Rohrs so, daß entlang dem Umfang des Querschnitts wenigstens eine Minimaltemperatur und eine Maximaltemperatur zum Erzielen der gewünschten Dickenänderung auftritt, erhält, dann die Vorform zum Kollabieren bringt und die Faser von der Vorform zieht, dadurch gekennzeichnet, daß zum Herstellen optischer Fasern mit nicht-kreisförmigem Kernquerschnitt (7) die maximale Schichtdicke im Bereich der minimalen Temperatur der Innenfläche des Rohrs und die minimale Schichtdicke im Bereich der maximalen Temperatur der Innenfläche des Rohrs enthalten wird und die Form des Trägerrohrs und die Temperaturverteilung über dessen Umfang so gewählt sind, daß während und nach dem Kollabieren der nicht-kreisförmige Kernquerschnitt, der im Kernbereich durch die nicht gleichförmige Ablagerung erzielt wurde, erhalten bleibt.

2. Verfahren nach Anspruch 1, dadurch gekennzeichnet, daß ein Trägerrohr (1) mit nicht-kreisförmigen Außenquerschnitt verwendet wird.

3. Verfahren nach Anspruch 2, dadurch gekennzeichnet, daß das Rohr Wände mit entlang dem Umfang wechselnder Dicke aufweist.

4. Verfahren nach Anspruch 3, dadurch gekennzeichnet, daß das Trägerrohr (1) außer seinem rohrförmigen Körper wenigstens eine den rohrförmigen Körper in Längsrichtung tangierende Stange aufweist, die aufgrund des Heizens in die Rohrwand inkorporiert wird.

5. Verfahren nach Anspruch 4, dadurch gekennzeichnet, daß eine Mehrzahl von den rohrförmigen Körper außen tangierenden Stangen vorhanden ist und zwei einander gegenüberliegende Stangen eine größere Querschnittsausdehnung haben als die anderen Stangen.

6. Verfahren nach einem der Ansprüche 1 bis 5, dadurch gekennzeichnet, daß man während der Ablagerung die Querschnittsform des Rohrs ändert, indem man auf den Druck innerhalb des Rohrs Einfluß nimmt.

7. Verfahren nach einem der Ansprüche 1 bis 6, dadurch gekennzeichnet, daß man die Dickenmaxima und -minima dadurch erhält, daß man zwischen eine Wärmequelle (4) und das Trägerrohr (10) ein abschirmendes brechendes Element (11) einsetzt, in dem das Trägerrohr enthalten ist und das wenigstens einen Schlitz (12) aufweist, der im wesentlichen entlang der gesamten Länge des abschirmenden Elements (11) verläuft.

8. Verfahren nach Anspruch 7, dadurch gekennzeichnet, daß das abschirmende Element (11) eine Mehrzahl von Schlitzen (12) gleicher Breite aufweist.

9. Verfahren nach Anspruch 7, dadurch gekennzeichnet, daß das abschirmende Element (11) eine Mehrzahl von Schlitzen (12) aufweist, von denen wenigstens einer eine von den anderen abweichende Breite aufweist.

**Revendications**

1. Procédé de fabrication de fibres optiques, dans lequel on fabrique une préforme en déposant sur la surface interne d'un tube de support (1; 10) une succession de couches du matériau (5) constituant la fibre, l'épaisseur d'une partie au moins des couches étant variable le long du périmètre d'une section quelconque du tube de support (1, 10) entre au moins un maximum et un minimum, le dépôt du matériau étant obtenu per synthèse à température élevée de réactifs en phase vapeur, et cette épaisseur non uniforme étant due à une non-uniformité de température du tube qui donne lieu, le long du périmètre de la section, à au moins un minimum de température et un maximum de température pour donner l'épaisseur variable désirée, et dans lequel on fait s'affaisser la préforme et on étire la fibre à partir de la préforme, caractérisé en ce que, pour la fabrication de fibres optiques avec section transversale non circulaire du coeur (7), on obtient l'épaisseur maximale des couches dans la région de la température minimale de la surface interne du tube, et on obtient l'épaisseur minimale des couches dans la région de la température maximale de la surface interne du tube, la forme du tube de support et la distribution de température sur la périphérie de celui-ci étant choisies de façon a maintenir, pendant et après l'affaissement, la section transversale non circulaire du coeur obtenue dans la région du coeur au moyen du dépôt non uniforme.

2. Procédé selon la revendication 1, caractérisé en ce qu'on emploie un tube de support (1) avec section transversale externe non circulaire.

3. Procédé selon la revendication 2, caractérisé en ce que ledit tube comporte des parois d'épaisseur variable le long du périmètre.

4. Procédé selon la revendication 3, caractérisé en ce que ledit tube de support (1) comprend, outre à son corps tubulaire, au moins une tige, tangente au corps tubulaire, qui est incorporée dans la paroi du tube sous l'effet du chauffage.

5. Procédé selon la revendication 4, caractérisé en ce qu'on prévoit une pluralité de tiges tangentes extérieurement au corps tubulaire, deux tiges opposées ayant des dimensions de la section transversale plus grandes que les autres.

6. Procédé selon l'une quelconque des revendications 1 à 5, caractérisé en ce que pendant le dépôt on fait varier la forme de la section du tube en agissant sur la pression à l'intérieur du tube.

7. Procédé selon l'une quelconque des revendications 1 à 6, caractérisé en ce que lesdits maximums et minimums d'épaisseur sont obtenus en disposant, entre une source de chaleur (4) et le tube de support (10), un écran réfractaire (11) qui loge le tube de support et comporte au moins une fente (12) qui s'étend substantiellement sur toute la longueur de l'écran (11).

8. Procédé selon la revendication 7, caractérisé en ce que ledit écran (11) comporte une pluralité de fentes (12) ayant la même largeur.

9. Procédé selon la revendication 7, caractérisé en ce que ledit écran (11) comporte une pluralité de fentes (12) dont une au moins a largeur différente des autres.

FIG. 1

FIG. 2

FIG. 3

FIG. 4

FIG.5

EP 0 220 715 B1

VII

11

12

VII

4

10

FIG. 6

13a

12a

5

12b

13d

13b

12d

12c

13c

FIG. 7

t

12a  13a  12b  13b  12c  13c  12d  13d  12a

FIG. 8